# EUROPÄISCHE PATENTSCHRIFT

(11) **EP 0 963 811 B1**
(45) Veröffentlichungstag und Bekanntmachung des Hinweises auf die Patenterteilung: **05.03.2003**
(21) Anmeldenummer: 99110536.2
(22) Anmeldetag: 01.06.1999
(51) Int. Cl.: B23Q 16/08, B23Q 16/06, B23Q 5/04, B23Q 37/00, B23Q 16/04

(54) **Halter für eine Motorspindel an einer Werkzeugmaschine**
Holder for a motor spindle on a machine tool
Support pour un arbre motorisé sur une machine-outil

(30) Priorität: 12.06.1998 DE 29810481 U
(43) Veröffentlichungstag der Anmeldung: 15.12.1999
(73) Patentinhaber: Jäger, Alfred, 61239 Ober-Mörlen (DE)
(72) Erfinder: Jäger, Alfred, 61239 Ober-Mörlen (DE)
(74) Vertreter: Haar, Lucas Heinz Jörn, Dipl.-Ing.

(56) Entgegenhaltungen:
- EP-A- 0 033 373
- DE-U- 9 420 589
- PATENT ABSTRACTS OF JAPAN vol. 013, no. 036 (M-790), 26. Januar 1989 (1989-01-26) & JP 63 245342 A (DAI SHOWA SEIKI KK), 12. Oktober 1988 (1988-10-12)

## Beschreibung

Die Erfindung betrifft einen Halter zur auswechselbaren Halterung einer Motorspindel in einer Werkzeugmaschine mit einem an dem Gehäuse der Motorspindel befestigbaren Tragzapfen, der mit seinem freien Ende in eine drehbare Aufnahme der Werkzeugmaschine einsetzbar ist und der die Motorspindel in einem Winkel zur Drehachse der Aufnahme hält.

Motorspindeln werden in spanenden Werkzeugmaschinen zur Durchführung bestimmter Bearbeitungsvorgänge verwendet. Sie bestehen aus einem mit sehr hoher Drehzahl umlaufenden Elektromotor kompakter Bauart, dessen Motorwelle die Antriebsspindel für das Bearbeitungswerkzeug, zum Beispiel einen Fräskopf bildet. Zur Halterung in der Werkzeugmaschine wird an dem Gehäuse der Motorspindeln im allgemeinen ein Tragzapfen befestigt, der in die Werkzeugaufnahme der Hauptspindel der Werkzeugmaschine einsetzbar ist. Der Tragzapfen kann gerade oder gekröpft sein, so daß die Motorspindel entweder koaxial oder in einem Winkel zur Hauptspindel gehalten wird. Im letzteren Fall erfolgt seither die Fixierung der Motorspindel in einer Drehwinkelposition und die Aufnahme des beim Betrieb der Motorspindel auftretenden Reaktionsdrehmoments durch die Hauptspindel der Werkzeugmaschine, die dazu als C-Achse der Maschinensteuerung ausgelegt sein muß. Eine solche Anordnung ist aus der EP 0 808 688 A1 bekannt. In von Hand gesteuerten Werkzeugmaschinen werden seither nur Motorspindeln mit geradem Tragzapfen eingesetzt.

Es ist weiterhin aus der US 5 697 739 A eine Halterung für eine in einem Winkel zur Hauptspindel angeordnete Motorspindel bekannt, bei der zwischen einem Verbindungsblock, der mit einem Tragzapfen in der Hauptspindel gehalten und drehfest an dem Maschinengehäuse abgestützt ist, und einer die Motorspindel tragenden Brückenplatte eine Drehkupplung angeordnet ist, die eine Dreheinstellung der Motorspindel um die Achse der Hauptspindel ermöglicht. Die Drehkupplung weist einen Flansch mit einem Paar gegenüberliegender gebogener Einstellschlitze auf, durch die Befestigungsschrauben hindurchgreifen, die in Gewindebohrungen in der Brückenplatte eingeschraubt sind. Nach dem Lösen der Schrauben kann die Brückenplatte in eine gewünschte Position innerhalb des durch die gebogenen Einstellschlitze zugelassenen Bereichs gedreht werden. Durch Festziehen der Schrauben wird die Brückenplatte in der erreichten Position fixiert.

Der Erfindung liegt die Aufgabe zugrunde, einen Halter für eine Motorspindel der eingangs genannten Art zu schaffen, mit dem die Motorspindel in mehreren, insbesondere einer Vielzahl von unterschiedlichen Bearbeitungspositionen festhaltbar ist und der auf einfache Weise das wiederholgenaue Umsetzen der Motorspindel von einer Bearbeitungsposition in eine andere ermöglicht.

Die Aufgabe wird erfindungsgemäß dadurch gelöst, daß der Tragzapfen zur Bildung eines Teilkopfes eine mit mehreren Längsnuten versehene Rotationsfläche aufweist, daß ein ringförmiger Spannkörper den Tragzapfen im Bereich der Rotationsfläche umgreift, auf der Rotationsfläche festspannbar ist und gegen eine Drehung um die Rotationsfläche in beiden Drehrichtungen an einem festen Anschlag der Werkzeugmaschine abgestützt ist und daß der Spannkörper eine radial bewegbare Sperrklinke aufweist, die zur Festlegung einer Teilungsposition in jeweils eine der Längsnuten in der Rotationsfläche einrastbar ist.

Mit dem erfindungsgemäßen Halter kann die Position der Motorspindel in einem Verstellbereich von 360° in eine durch die Zahl der Längsnuten vorgegebene Zahl von Bearbeitungsstellungen gedreht werden, ohne daß die Befestigung des Halters in der Aufnahme der Werkzeugmaschine gelöst werden muß. Das Umsetzen der Motorspindel ist sehr einfach durchführbar. Es ist lediglich erforderlich, den Spannkörper zu lösen und nach Drehen der Motorspindel in die gewünschte Position den Spannkörper wieder festzuspannen. Die einzelnen Stellungen der Motorspindel werden jeweils winkelgenau durch Einrasten der Sperrklinke in die entsprechende Längsnut bestimmt. Da sich die Aufnahme des Tragzapfens, in der Regel ist dies die Hauptspindel der Werkzeugmaschine, beim Umsetzen der Motorspindel mitdrehen kann, ist hierbei das zeitaufwendige Lösen des Tragzapfens von der Aufnahme nicht erforderlich. Der erfindungsgemäße Halter eignet sich vor allem für die Durchführung von Bearbeitungsvorgängen, die von einer Bedienungsperson von Hand gesteuert werden und die Bearbeitungsschritte in mehreren im Winkel zueinander angeordneten Ebenen erfordern.

Eine genaue Justierung einer Nullstellung des Halters kann erfindungsgemäß auf einfache Weise dadurch erreicht werden, daß die Abstützung des Spannkörpers an dem festen Anschlag der Werkzeugmaschine über eine Stelleinrichtung erfolgt, deren wirksame Länge in tangentialer Richtung bezogen auf die Rotationsfläche veränderbar ist.

Der Spannkörper kann erfindungsgemäß einen geschlitzten Spannring aufweisen, der durch eine den Schlitz kreuzende Spannschraube festspannbar ist, wobei von einem Ende des Spannrings sich ein Arm in radialer Richtung erstreckt, in dem die Stelleinrichtung radial verschiebbar angebracht ist. Diese Ausgestaltung des Spannkörpers ist einfach und kostengünstig herstellbar und einfach in der Handhabung. Sie hat weiterhin den Vorteil, daß der Spannring beim Festspannen bestrebt ist, den Tragzapfen im Sinne der Anzugbewegung der Spannschraube geringfügig zu drehen, wodurch eine feste Anlage zwischen der Sperrklinke und der positionierenden Seitenwand der Längsnut und damit jeweils eine genaue Einhaltung der durch die Längsnut vorgegebenen Winkelposition erreicht wird. Die Längsnuten und der in sie eingreifende Zahn der Sperrklinke können erfindungsgemäß einen dreieckigen Querschnitt haben, wobei die den Teilungswinkel bestimmenden Anschlagflächen in einer zur Rotationsfläche radialen Ebene liegen. Diese Ausgestaltung erleichtert nach dem Lösen des Spannkörpers das Drehen des Tragzapfens in der Richtung, in der die in Sekantenrichtung verlaufenden Flächen der Längsnuten die Sperrklinke zurückdrücken. Soll der Tragzapfen in der entgegengesetzten Richtung gedreht werden, so muß die Sperrklinke von Hand gelöst werden.

Zur Aufnahme der Motorspindel weist der Tragzapfen erfindungsgemäß eine geschlitzte Spannbuchse auf, in der das zylindrische Gehäuse der Motorspindel festspannbar ist. Hierdurch kann die Motorspindel auf einfache Weise von dem Halter getrennt und in einen anderen, z.B. geraden Halter eingesetzt werden. Weiterhin ist von Vorteil, wenn die Spannbuchse exzentrisch und derart geneigt zu Achse des Tragzapfens angeordnet ist, daß die Achse der Spannbuchse die Achse des Tragzapfens in einem Winkel von ca. 30° kreuzt, wobei der Kreuzungspunkt in der Nähe der Spitze des von der Motorspindel angetriebenen Werkzeugs liegt. Durch eine solche Ausgestaltung des erfindungsgemäßen Halters können beispielsweise alle Innenflächen eines oben offenen, quaderförmigen Hohlraums bearbeitet werden.

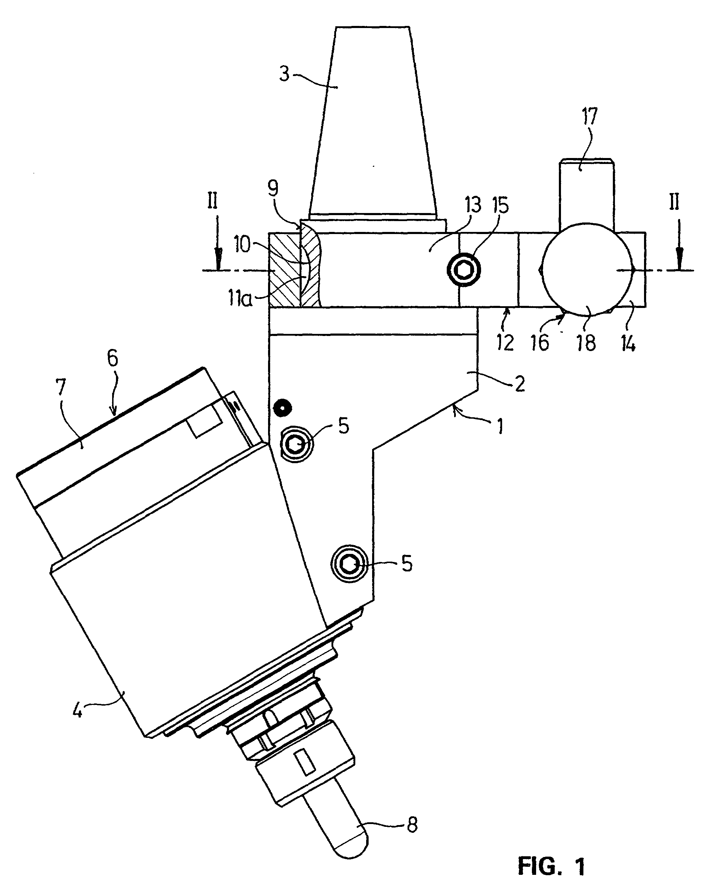

Ein Ausführungsbeispiel der Erfindung ist in der Zeichnung dargestellt und wird im folgenden näher beschrieben. Es zeigen
- Figur 1: eine Seitenansicht eines erfindungsgemäßen Halters mit eingespannter Motorspindel und

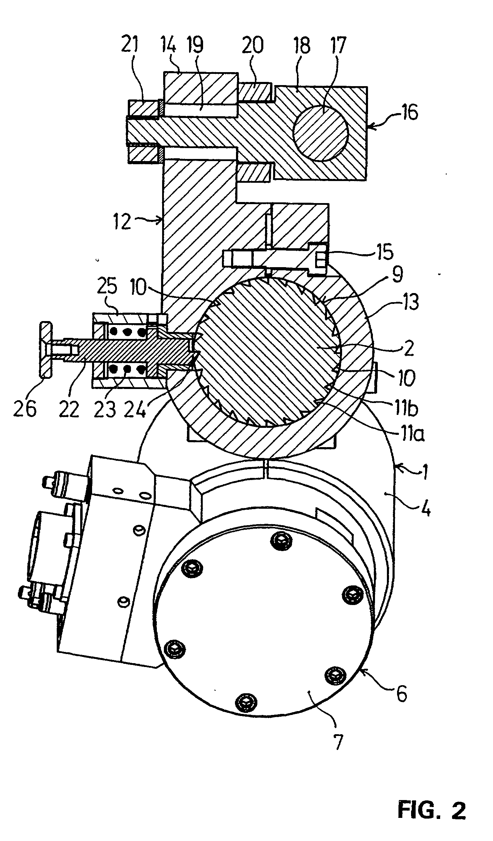

- Figur 2: einen Querschnitt durch den Halter gemäß Figur 1 entlang der Linie II-II.

Der in der Zeichnung dargestellte Halter 1 besteht aus einem Tragzapfen 2, der an seinem oberen Ende einen Steilkegel 3 für die Aufnahme in der Hauptspindel einer Werkzeugmaschine aufweist. An dem unteren freien Ende des Tragzapfens 2 ist außermittig eine geschlitzte Spannbuchse 4 angebracht. Der Schlitz der Spannbuchse 4 durchdringt auch den unteren Bereich des Tragzapfens 2, in dem zwei Spannschrauben 5 angeordnet sind. Die Spannbuchse 4 trägt eine Motorspindel 6, die aus einem hochtourigen Elektromotor 7 und einem spanenden Werkzeug 8 besteht, das unten aus der Spannbuchse 4 herausragt und bis zur Mittelachse des Tragzapfens 2 reicht. Die Spannbuchse 4 ist in einem Winkel von 30° zur Mittelachse des Tragzapfens 2 geneigt. Ihre Mittelachse kreuzt die Mittelachse des Tragzapfens 2 in der Nähe der Spitze des Werkzeugs 8.

Unterhalb des Steilkegels 3 weist der Tragzapfen 2 eine Zylinderfläche 9 auf. In ihrem mittleren Bereich ist die Zylinderfläche mit einer Vielzahl von Längsnuten 10 versehen, die im gleichen Winkelabstand voneinander angeordnet sind. Die Längsnuten 10 haben eine dreieckige Querschnittsform, die jeweils durch eine radiale Anschlagfläche 11a und eine in Sekantenrichtung verlaufende Rampenfläche 11b gebildet ist.

Auf dem Tragzapfen 2 ist ein Spannkörper 12 angeordnet, der mit einem geschlitzten Spannring 13 die Zylinderfläche 9 umgreift und einen sich in radialer Richtung erstreckenden Arm 14 aufweist. Der Spannring 13 wird mit einer Spannschraube 15 angezogen. An dem Arm 14 ist eine Stelleinrichtung 16 mit einem Lagerzapfen 17 befestigt, der in eine zur Hauptspindel parallele Aufnahmebohrung im Gehäuse der Werkzeugmaschine einsteckbar ist, um den Spannkörper 12 und über diesen den Tragzapfen 2 in einer vorgegebenen Winkelstellung festzuhalten und gegen Drehung um die Mittelachse des Tragzapfens 2 zu sichern. Die Stelleinrichtung 16 besteht aus einem Bolzen 18, der den Lagerzapfen 17 trägt und durch ein Langloch 19 in dem Arm 14 hindurchgesteckt ist. Auf beiden Seiten des Armes 14 weist der Bolzen 18 jeweils einen Gewindeabschnitt auf, der eine Mutter 20 bzw. 21 trägt. Mit Hilfe der Mutter 20, 21 läßt sich der Abstand zwischen dem Lagerzapfen 17 und dem Arm 14 im Rahmen der durch die Länge der Gewindeabschnitte des Bolzens 18 gegebenen Grenzen variieren und der Spannkörper 12 in eine Nullstellung bringen. An dem Spannring 13 ist unmittelbar angrenzend an den Arm 14 eine Sperrklinke 22 angeordnet, die in einer Bohrung im Spannring 13 radial beweglich gelagert ist und von einer abgestützten Feder 23 mit einem Zahn 24 gegen die Zylinderfläche 9 bzw. die Längsnuten 10 gedrückt wird. Die Feder 23 ist über eine Hülse 25 an den Spannring 13 abgestützt. Ein Griff 26 dient zum Zurückziehen der Sperrklinke 22 in die Lösestellung. Der Zahn 24 der Sperrklinke 22 ist an die Form der Längsnuten 10 angepaßt und ebenso wie diese mit einer radialen Anschlagfläche und einer in Sekantenrichtung verlaufenden Rampenfläche versehen.

Soll die Motorspindel aus der in der Zeichnung dargestellten Stellung beispielsweise um 90° im Uhrzeigersinn gedreht werden, so wird durch Lösen der Spannschraube 15 zunächst der Spannring 13 so weit gelöst, daß sich der Tragzapfen 2 in dem Spannring 13 leicht drehen läßt. Anschließend wird die Einheit aus Tragzapfen 2 und Motorspindel 6 zusammen mit der Hauptspindel der Werkzeugmaschine, von der der Tragzapfen 2 gehalten wird, im Uhrzeigersinn gedreht, bis die gewünschte Winkelstellung erreicht ist. Bei diesem Vorgang gleitet der Zahn 24 der Sperrklinke 22 jeweils über die Rampenflächen 11b der Längsnuten 10 hinweg. Ist die Sperrklinke 22 in die der gewünschten Winkelstellung entsprechende Längsnut 10 eingesetzt, so wird durch leichtes Zurückdrehen des Tragzapfens 2 die Anschlagfläche 11a der Längsnut 10 mit der Anschlagfläche an dem Zahn 24 der Sperrklinke 22 in Kontakt gebracht. Durch Anziehen der Spannschraube 15 wird dann der Spannring 13 in dem Spannkörper 12 festgespannt. Bei diesem Vorgang werden durch den Spannring 13 die Anlageflächen von Längsnut 10 und Sperrklinke 22 gegeneinander gedrückt, so daß die ausgewählte Winkelstellung genau eingehalten wird.

## Patentansprüche

1. Halter (1) zur auswechselbaren Halterung einer Motorspindel (6), in einer Werkzeugmaschine mit einem an dem Gehäuse der Motorspindel (6) befestigbaren Tragzapfen (2), der mit seinem freien Ende an einer drehbaren Aufnahme der Werkzeugmaschine befestigbar ist und der die Motorspindel (6) in einem Winkel zur Drehachse der Aufnahme hält, **dadurch gekennzeichnet, daß** der Tragzapfen (2) zur Bildung eines Teilkopfes eine mit mehreren Längsnuten (10) versehene Rotationsfläche (9) aufweist, daß ein ringförmiger Spannkörper (12) den Tragzapfen (2) im Bereich der Rotationsfläche (9) umgreift, auf der Rotationsfläche (9) festspannbar ist und gegen eine Drehung um die Rotationsfläche (9) in beiden Drehrichtungen an einem festen Anschlag der Werkzeugmaschine abgestützt ist und daß der Spannkörper (12) eine radial bewegbare Sperrklinke (22) aufweist, die zur Festlegung einer Teilungsposition in jeweils eine der Längsnuten (10) in der Rotationsfläche (9) einrastbar ist.

2. Halter nach Anspruch 1, **dadurch gekennzeichnet, daß** die Abstützung des Spannkörpers (12) an dem festen Anschlag der Werkzeugmaschine über eine Stelleinrichtung (16) erfolgt, deren wirksame Länge in tangentialer Richtung bezogen auf die Rotationsfläche (9) veränderbar ist.

3. Halter nach einem der Ansprüche 1 oder 2, **dadurch gekennzeichnet, daß** der Spannkörper (12) einen geschlitzten Spannring (13) aufweist, der durch eine den Schlitz kreuzende Spannschraube (15) festspannbar ist, wobei von einem Ende des Spannrings (13) sich ein Arm (14) in radialer Richtung erstreckt, in dem die Stelleinrichtung (16) radial verschiebbar angebracht ist.

4. Halter nach einem der vorhergehenden Ansprüche, **dadurch gekennzeichnet, daß** die Längsnuten (10) und der in sie eingreifende Zahn (24) der Sperrklinke (22) einen dreieckigen Querschnitt haben, wobei die den Teilungswinkel bestimmenden Anschlagflächen (11a) in einer zur Rotationsfläche (9) radialen Ebene liegen.

5. Halter nach einem der vorhergehenden Ansprüche, **dadurch gekennzeichnet, daß** der Tragzapfen (2) eine geschlitzte Spannbuchse (4) aufweist, in der das zylindrische Gehäuse der Motorspindel (6) festspannbar ist.

6. Halter nach einem der vorhergehenden Ansprüche, **dadurch gekennzeichnet, daß** die Spannbuchse (4) exzentrisch und derart geneigt zu Mittelachse des Tragzapfens (2) angeordnet ist, daß die Mittelachse der Spannbuchse (4) die Mittelachse des Tragzapfens (2) in einem Winkel von ca. 30° kreuzt, wobei der Kreuzungspunkt in der Nähe der Spitze des von der Motorspindel (6) angetriebenen Werkzeugs (8) liegt.

## Claims

1. Support (1) for the interchangeable attachment of a motor spindle (6) in a machine tool with a journal (2) which can be fastened to the housing of the motor spindle (6), the journal (2) being fastenable by its free end to a rotatable holder of the machine tool and holding the motor spindle (6) at an angle to the axis of rotation of the holder, **characterised in that** the journal (2) comprises a surface of revolution (9) provided with a plurality of longitudinal grooves (10) to form a parting head, **in that** an annular fixing body (12) surrounds the journal (2) in the region of the surface of revolution (9), can be tightened on the surface of revolution and is supported against rotation about the surface of revolution (9) in both directions of rotation on a fixed stop of the machine tool and **in that** the fixing body (12) comprises a radially movable locking pawl (22) which can be latched into one of the respective longitudinal grooves (10) in the surface of revolution (9) to establish a pitch position.

2. Support according to claim 1, **characterised in that** the fixing body (12) is supported on the fixed stop of the machine tool via an adjusting device (16), the effective length of which can be changed in the tangential direction with respect to the surface of revolution (9).

3. Support according to any one of claims 1 or 2, **characterised in that** the fixing body (12) comprises a split fixing ring (13) which can be tightened by a tensioning bolt (15) intersecting the slot, an arm (14) extending in the radial direction from one end of the fixing ring (13), in which arm the adjusting device (16) is disposed in a radially displaceable manner.

4. Support according to any one of the preceding claims, **characterised in that** the longitudinal grooves (10) and the tooth (24) of the locking pawl (22) engaging therein have a triangular cross-section, the stop faces (11a) determining the pitch angle being in a plane which is radial to the surface of revolution (9).

5. Support according to any one of the preceding claims, **characterised in that** the journal (2) comprises a split bush (4) in which the cylindrical housing of the motor spindle (6) can be tightened.

6. Support according to any one of the preceding claims, **characterised in that** the bush (4) is arranged eccentrically and is inclined to the centre line of the journal (2) such that the centre line of the bush (4) intersects the centre line of the journal (2) at an angle of about 30°, the points of intersection being close to the tip of the tool (8) driven by the motor spindle (6).

## Revendications

1. Support (1) pour la fixation interchangeable d'une broche de moteur (6) dans une machine-outil avec un tourillon porteur (2) pouvant être fixé sur le boîtier de la broche de moteur (6) et qui peut être fixé avec son extrémité libre sur un logement pivotant de la machine-outil et qui maintient la broche de moteur (6) avec un certain angle par rapport à l'axe de rotation du logement, **caractérisé en ce que** le tourillon porteur (2) présente une surface de rotation (9) pourvue de plusieurs rainures longitudinales (10) pour former une poupée diviseur, **en ce qu'**un corps de serrage (12) annulaire entoure le tourillon porteur (2) dans la zone de la surface de rotation (9), peut être fixé sur la surface de rotation (9) et s'appuie sur une butée fixe de la machine-outil pour l'empêcher de tourner autour de la surface de rotation (9) dans les deux sens de rotation et **en ce que** le corps de serrage (12) présente un cliquet de blocage (22) mobile dans le sens radial, qui peut être engagé dans une des rainures longitudinales (10) dans la surface de rotation (9) pour définir une position de partage.

2. Support selon la revendication 1, **caractérisé en ce que** l'appui du corps de serrage (12) sur la butée fixe de la machine-outil s'effectue par un système de réglage (16) dont la longueur effective peut être modifiée dans la direction tangentielle par rapport à la surface de rotation (9).

3. Support selon l'une quelconque des revendications 1 ou 2, **caractérisé en ce que** le corps de serrage (12) présente une bague de serrage (13) fendue, qui peut être serrée par une vis de serrage (15) croisant la fente, un bras (14), dans lequel le système de réglage (16) peut être disposé de façon coulissante dans le sens radial, s'étendant à partir d'une extrémité de la bague de serrage (13) dans en direction radiale.

4. Support selon l'une quelconque des revendications précédentes, **caractérisé en ce que** les rainures longitudinales (10) et la dent (24) du cliquet de blocage (22) qui s'engage dans ces rainures ont une section triangulaire, les surfaces d'appui (11a) déterminant le pas angulaire étant disposées dans un plan radial par rapport à la surface de rotation (9).

5. Support selon l'une quelconque des revendications précédentes, **caractérisé en ce que** le tourillon porteur (2) est muni d'une douille de serrage (4) fendue dans laquelle peut être fixé le boîtier cylindrique de la broche de moteur (6).

6. Support selon l'une quelconque des revendications précédentes, **caractérisé en ce que** la douille de serrage (4) est disposée de façon excentrée et inclinée par rapport à l'axe médian du tourillon porteur (2) de telle façon que l'axe médian de la douille de serrage (4) croise l'axe médian du tourillon porteur (2) avec un angle d'environ 30°, le point d'intersection se situant à proximité de l'extrémité de l'outil (8) entraîné par la broche de moteur (6).
